# EUROPEAN PATENT SPECIFICATION

(11) **EP 1 374 566 B1**
(45) Date of publication and mention of the grant of the patent: **22.06.2005**
(21) Application number: 02726162.7
(22) Date of filing: 13.03.2002
(51) Int. Cl.: H04N 5/222

(54) **NUMBER DISPLAY DEVICE FOR A CAMERA**
NUMMERANZEIGEVORRICHTUNG ZUR KAMERA
AFFICHEUR DE NUMERO POUR UNE CAMERA

(30) Priority: 26.03.2001 FR 0104441
(43) Date of publication of application: 02.01.2004
(73) Proprietor: Thomson Licensing S.A., 92100 Boulogne (FR)
(72) Inventor: SCHAFFNER, Eric, F-95250 Beauchamp (FR); NGUYEN, Van Hiep, F-75014 Paris (FR)
(74) Representative: Rossmanith, Manfred, Dr.
(86) International application number: PCT/EP2002/002775
(87) International publication number: WO 2002/078325

(56) References cited:
- US-A- 4 928 179
- PATENT ABSTRACTS OF JAPAN vol. 018, no. 017 (E-1488), 12 January 1994 (1994-01-12) & JP 05 252426 A (SONY CORP), 28 September 1993 (1993-09-28)

## Description

The invention relates to a number display device for a camera. These identification devices are most particularly found on professional cameras or on their viewfinder.

When producing a television broadcast, it is known to use several cameras so as to capture a scene from several different angles. The number of cameras varies according to the type of broadcast. In the studio, 3 to 8 cameras, and sometimes more, are commonly used. For sporting events or concerts, 16 cameras may be used simultaneously.

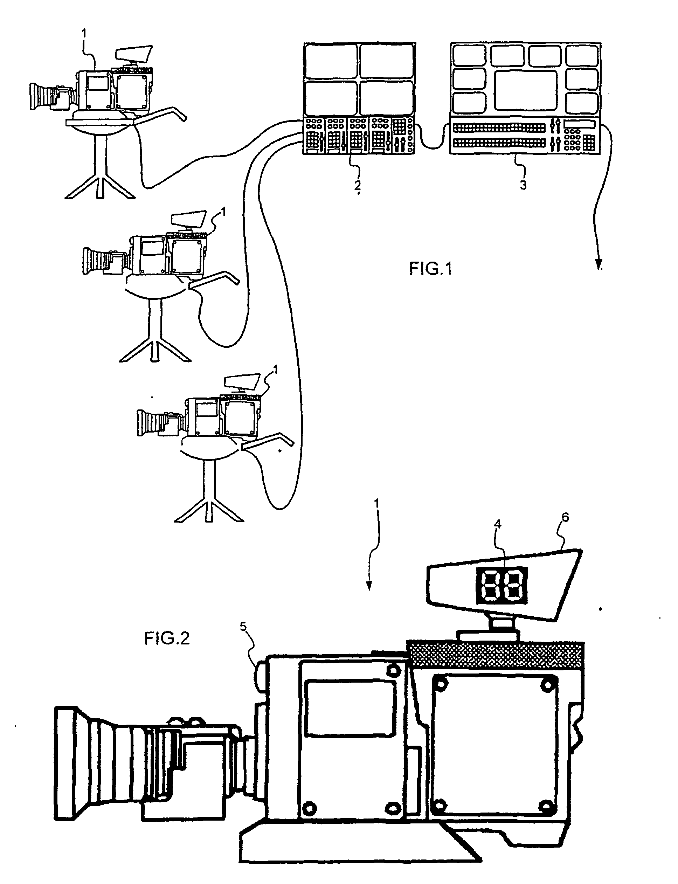

Figure 1 illustrates a television studio. A plurality of cameras 1 is connected to a control console 2 which serves to standardize the colours and the brightnesses of the various cameras. The control console 2 supplies the signals from the various cameras to the control room 3. The director is at the controls of the control room possibly with one or more assistants. Other director assistants are located close to the cameras so as to provide the director with information on anything happening out of the field of the cameras so as to be able to decide on possible camera movements. The cameras are moved by a cameraman according to orders given by the director.

The whole broadcast depends on the director and his assistants. So that the assistants can give good recommendations to the director, it is essential that they can identify at any time the cameras in their field of view. Also, they must know which camera is on air when the broadcast is live or filmed under conditions close to live. The broadcast presenter or presenters must also be able to identify the camera on air so as to know which camera is filming them.

To this end, the cameras 1 are furnished both with an identification device 4 and an on-air indicator light 5, for example as indicated in Figure 2. The identification device 4 makes it possible to display an identifier which is, for example, a number or a letter. Generally the identification device is placed high up, especially on the viewfinder 6 of the camera 1. It is known to use adhesives or mechanical marking devices which are sometimes backlit. The on-air indicator light 5 is placed in front of the camera and/or above the camera and sometimes on the viewfinder 6.

When the on-air indicator light is placed only at the front of the camera, persons placed behind it cannot see the indicator light directly. However, they can see from the glow reflected by an accessory placed close by, such as a sound boom or other accessory. However, it is not possible to determine which camera is on air when two cameras are side by side and when the on-air indicator light is not directly visible. It is known to place the indicator light above the camera to overcome the problems of visibility.

The use of an indicator light placed above the camera presents problems of visibility with respect to the identification device, which in general is illuminated either slightly or not at all. This is because, when the camera is located in the half-light of a studio, the on-air indicator light tends to dazzle the eyes of an assistant, preventing him from seeing the identification device of the camera which is illuminated either slightly or not at all.

The aim of the invention is to overcome the abovementioned problems of simultaneous visibility of the on-air indicator light and of camera identification. The invention proposes using an identification device for the camera with at least two colours in order to display the on-air signal using one colour without being detrimental to the readability of the identification device.

According to a first aspect, the invention is an identification device for a camera comprising a means for displaying a camera identifier. The said device comprises an illumination means for illuminating the identifier with at least two distinct colours, only one of the colours being used when the camera is on air.

According to a second aspect, the invention is a camera viewfinder comprising at least one identification device comprising a means for displaying an identifier for the camera on at least one outer face of said viewfinder. The identification device comprises an illumination means for illuminating the identifier with at least two distinct colours, only one of the colours being used when the camera is on air.

According to a third aspect, the invention is a camera comprising at least one identification device comprising a means for displaying an identifier for the camera. The identification device comprises an illumination means for illuminating the identifier with at least two distinct colours, only one of the colours being used when the camera is on air.

In order to improve the visibility of the identifier for the camera, especially for the presenters, three identification devices are used. A first device is placed on a face corresponding to the direction of an objective of the camera. A second and a third device are placed on the two opposing faces corresponding to the lateral sides of the camera. The first device allows the presenter to identify the cameras when the latter are not on air, which makes it possible to anticipate camera changes.

In order to improve the flexibility of use and the interchangeability of the cameras during a broadcast, the means for displaying the identifier is remotely controlled using a device for remotely controlling the camera. Thus, it is possible to change the number of the camera from the control room.

The invention will be better understood, and other particular features and advantages will become apparent on reading the following description, the description referring to the appended drawings among which:
Figure 1 shows schematically a television studio,
Figure 2 shows a camera according to the prior art,
Figure 3 shows a first embodiment of a camera identification device according to the invention,
Figures 4 and 5 show a second embodiment of an identification device according to the invention, and
Figure 6 shows a camera viewfinder according to the invention.

In order to produce an identification device illuminated with two colours, very many possibilities are offered.

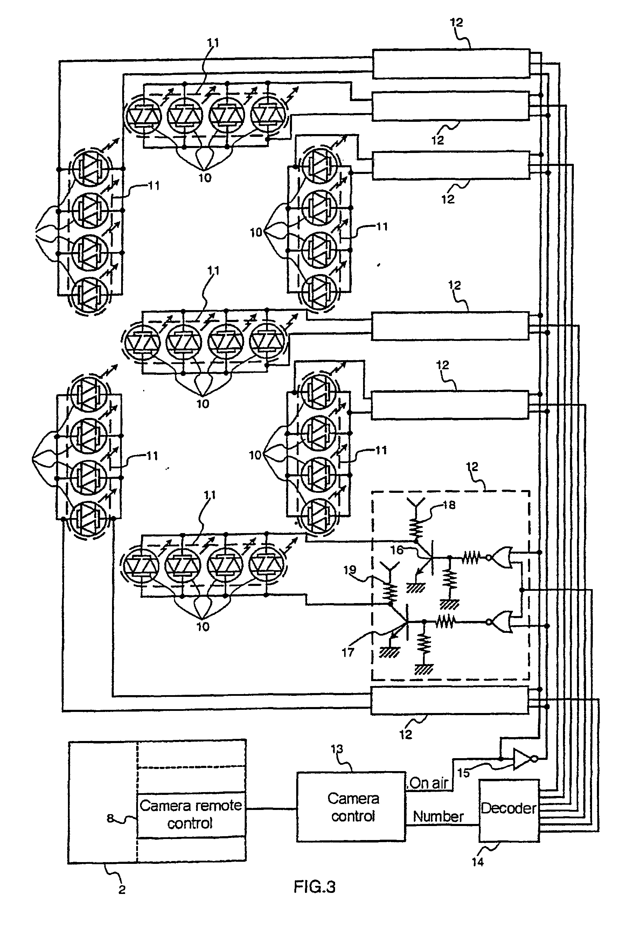

A first embodiment shown in Figure 3 provides a two-coloured light-emitting diode 10 system. A two-colour diode in fact consists of two diodes of different colours mounted head-to-tail, which are illuminated with a different colour depending on the current bias.

The diodes 10 are grouped in seven linear arrays 11 which form a digit. The diodes 10 of the same linear array 11 are connected in parallel such that they all light up in the same colour for a given bias. Each linear array 11 is connected to a control device 12 which biases the diodes 10 in one direction or in the other depending on three control signals.

The control signals are generated from the control circuit 13 of the camera 1. The control circuit 13 receives various information from the remote control device 8 of the control console 2. According to the invention, the remote control device 8 transmits, inter alia, on-air information and an identification code for.the camera 1. This information is transmitted regularly to the camera with all the other control information relating to the remote control of the camera. The control circuit 13 decodes all the information received, stores it and transmits it to the various circuits of the camera. The control circuit 13 continuously supplies an on-air signal and a number (when the identification code corresponds to a number) which corresponds to the last information received.

A decoder 14 transforms the number into seven illumination signals, one for each control device 12. Each illumination signal indicates whether the segment 11 corresponding to the control circuit 12 must be lit up or extinguished.

An inverter 15 receives the on-air signal and supplies a complementary signal. The on-air signal and the complementary signal are supplied to all the control circuits 12 and indicate to each control device the direction of the bias to be given to the diodes 10 when they have to be lit up.

The control circuit 12 is detailed in Figure 3. When the illumination signal is inactive (in the example, a logic level "1"), the transistors 16 and 17 are switched off and no current flows in the diodes 10 associated with the said control circuit 12. When the on-air signal is active (in the example, a logic level "0"), only one of the transistors 16 or 17 is switched on depending on the on-air signal. If the on-air signal is active (logic level "0"), the transistor 16 is switched on, creating a current flowing from the supply voltage to earth through the resistor 19, the diodes 10 and the transistor 16. If the on-air signal is inactive (logic level "1"), the transistor 17 is switched on, creating a current flowing from the supply voltage to earth through the resistor 18, the diodes 10 and the transistor 17.

In order to increase the brightness of the diodes when the camera is on-air, the resistors 18 and 19 are dimensioned such that the current is greater when the direction of the current passing through the diode corresponds to the colour associated with the on-air signal. Increasing the brightness by changing the colour reinforces the distinctive nature of the identification device when the camera is on air. Furthermore, so as not to change the customs of the set technicians, it is preferable that the colour associated with the on-air signal is red, which is less luminous than other colours, such as for example green.

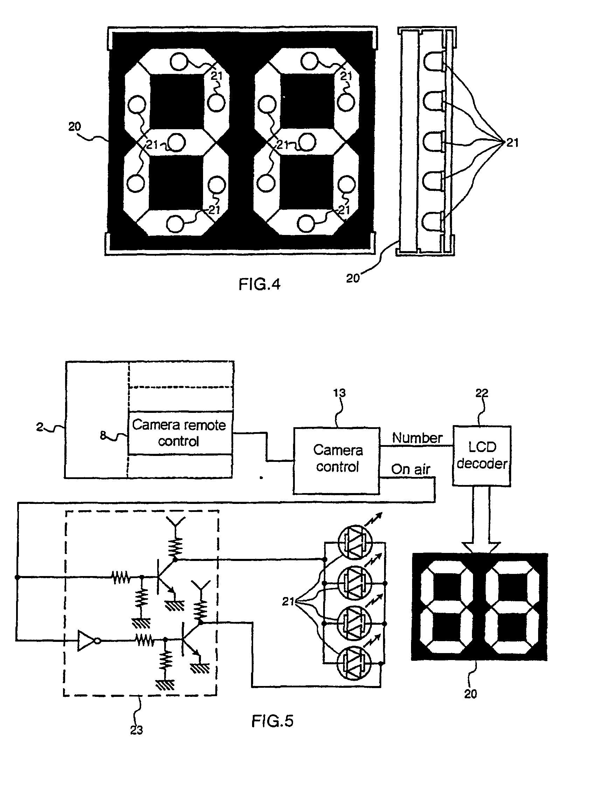

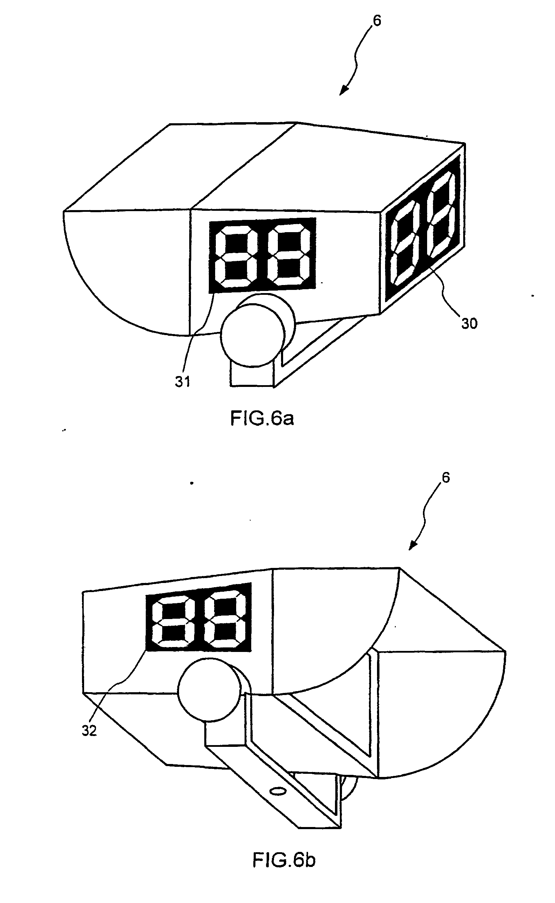

Other variants are possible for producing the identification device. Figures 4 and 5 shows a second embodiment using liquid crystals backlit with the help of diodes which has the advantage of consuming less power than the device of Figure 3. A liquid-crystal display 20, of the transmissive type, and for example of the type with two digits of seven segments, is placed in front of diodes 21 of the two-colour type. Since one property of the display 20 is that of diffusing light over the entire surface made transparent, it is therefore not necessary to use as many diodes as in the previous example. Advantageously, the diodes are placed in the transparent segments of the display 20 so as to supply maximum brightness.

As above, the control circuit 13 of the camera supplies an on-air signal and a number identifying the camera. A driver circuit 22, which is specific to the display used, receives the number and transforms it into control signals for the display 20 so as to make transparent the segments which form the desired number. A control circuit 23 receives the on-air signal and biases the diodes 21 in one direction or in the other depending on the state of the on-air signals.

Preferably, red and green diodes are used, the red being lit up when the camera is on air. Also, the control circuit 23 may supply a higher current when the diodes are set to red.

Other variants are possible for producing the identification device which is the object of the invention, the important factor being to have a display device making it possible to view a camera identifier in a given colour when the camera is on air and in another colour when it is not on air. It is especially possible to use backlighting means other than the diodes.

So that the identification device is very visible, it is preferable to place it high up with respect to the camera, especially on the viewfinder 6. In order that it is made visible from an angle of at least 270°, it is proposed to place three identification devices 30 to 32, as shown in Figure 6, with a first device 30 being placed on one face of the viewfinder 6, corresponding to the direction of the objective of the camera 1. A second and a third device 31 and 32 are placed on two opposed faces of the viewfinder 6 corresponding to the lateral sides of the camera 1.

Of course, the use of three devices corresponds to maximum markings. In order to decrease the cost, it is quite possible to replace the device 30 located at the front of the camera with a single on-air indicator light, since in general, the director's assistants are placed behind the cameras.

## Claims

1. Identification device for a camera (1) comprising a means (10, 20) for displaying a camera identifier, **characterized in that** it comprises an illumination means (10, 21) for illuminating the identifier with at least two distinct colours, only one of the colours being used when the camera (1) is on air.

2. Camera viewfinder comprising at least one identification device (30 to 32) comprising a means (10, 20) for displaying an identifier for the camera on at least one outer face of said viewfinder (6), **characterized in that** the identification device comprises an illumination means (10, 21) for illuminating the identifier with at least two distinct colours, only one of the colours being used when the camera is on air.

3. Viewfinder according to Claim 2, **characterized in that** it comprises three identification devices (30 to 32), a first device (30) being placed on one face corresponding to the direction of an objective of the camera (1), a second and a third device (31 and 32) being placed on two opposing faces corresponding to the lateral sides of the camera (1).

4. Camera comprising at least one identification device comprising a means (10, 20) for displaying an identifier for the camera, **characterized in that** the identification device comprises an illumination means (10, 21) for illuminating the identifier with at least two distinct colours, only one of the colours being used when the camera is on air.

5. Camera according to Claim 4, **characterized in that** the identification device is placed on the viewfinder (6) of the camera.

6. Camera according to either of Claims 4 and 5, **characterized in that** it comprises at least three devices (30 to 32) on three distinct sides.

7. Device according to Claim 1, viewfinder according to either of Claims 2 and 3, or camera according to one of Claims 4 to 6, **characterized in that** the illumination means consists of light-emitting diodes (10, 21).

8. Device, viewfinder or camera according to Claim 7, **characterized in that** the means for displaying the identifier for the camera is a liquid crystal screen (20) backlit by the illumination means (21).

9. Device, viewfinder or camera according to Claim 7, **characterized in that** the light-emitting diodes (10, 21) are illuminated more brightly when the camera is on air.

10. Device according to Claim 1, viewfinder according to either of Claims 2 and 3, or camera according to one of Claims 4 to 6, **characterized in that** the colour used when the camera is on air is red.

11. Device according to Claim 1, viewfinder according to either of Claims 2 and 3, or camera according to one of Claims 4 to 6, **characterized in that** the means (10, 20) for displaying the identifier is remotely controlled using a device for remotely controlling the camera.

## Patentansprüche

1. Identifikationseinrichtung für eine Kamera (1) die ein Mittel (10, 20) zum Anzeigen eines Kameraidentifikators umfaßt, **dadurch gekennzeichnet, daß** sie ein Beleuchtungsmittel (10, 21) umfaßt zum Beleuchten des Identifikators mit mindestens zwei unterschiedlichen Farben, wobei nur eine der Farben verwendet wird, wenn die Kamera (1) auf Sendung ist.

2. Kamerasucher, der mindestens eine Identifikationseinrichtung (30-32) aufweist, umfassend ein Mittel (10, 20) zum Anzeigen eines Identifikators für die Kamera an mindestens einer Außenfläche des Suchers (6), **dadurch gekennzeichnet, daß** die Identifikationseinrichtung ein Beleuchtungsmittel (10, 21) zum Beleuchten des Identifikators mit mindestens zwei unterschiedlichen Farben umfaßt, wobei nur eine der Farben verwendet wird, wenn die Kamera auf Sendung ist.

3. Sucher nach Anspruch 2, **dadurch gekennzeichnet, daß** er drei Identifikationseinrichtungen (30-32) umfaßt, wobei eine erste Einrichtung (30) an einer Fläche entsprechend der Richtung eines Objektivs der Kamera (1) plaziert ist, wobei eine zweite und eine dritte Einrichtung (31 und 32) an zwei gegenüberliegenden Seiten entsprechend den seitlichen Seiten der Kamera (1) plaziert sind.

4. Kamera mit mindestens einer Identifikationseinrichtung, umfassend ein Mittel (10, 20) zum Anzeigen eines Identifikators für die Kamera, **dadurch gekennzeichnet, daß** sie ein Beleuchtungsmittel (10, 21) umfaßt zum Beleuchten des Identifikators mit mindestens zwei unterschiedlichen Farben, wobei nur eine der Farben verwendet wird, wenn die Kamera auf Sendung ist.

5. Kamera nach Anspruch 4, **dadurch gekennzeichnet, daß** die Identifikationseinrichtung am Sucher (6) der Kamera plaziert ist.

6. Kamera nach einem der Ansprüche 4 und 5, **dadurch gekennzeichnet, daß** sie mindestens drei Einrichtungen (30-32) an drei unterschiedlichen Seiten umfaßt.

7. Einrichtung nach Anspruch 1, Sucher nach einem der Ansprüche 2 und 3 oder Kamera nach einem der Ansprüche 4 bis 6, **dadurch gekennzeichnet, daß** das Beleuchtungsmittel aus Leuchtdioden (10, 21) besteht.

8. Einrichtung, Sucher oder Kamera nach Anspruch 7, **dadurch gekennzeichnet, daß** das Mittel zum Anzeigen des Identifikators für die Kamera ein von dem Beleuchtungsmittel (21) hintergrundbeleuchteter Flüssigkristallschirm (20) ist.

9. Einrichtung, Sucher oder Kamera nach Anspruch 7, **dadurch gekennzeichnet, daß** die Leuchtdioden (10, 21) heller leuchten, wenn die Kamera auf Sendung ist.

10. Einrichtung nach Anspruch 1, Sucher nach einem der Ansprüche 2 und 3 oder Kamera nach einem der Ansprüche 4 bis 6, **dadurch gekennzeichnet, daß** die Farbe Rot verwendet wird, wenn die Kamera auf Sendung ist.

11. Einrichtung nach Anspruch 1, Sucher nach einem der Ansprüche 2 und 3 oder Kamera nach einem der Ansprüche 4 bis 6, **dadurch gekennzeichnet, daß** das Mittel (10, 20) zum Anzeigen des Identifikators unter Verwendung einer Einrichtung zum Fernsteuern der Kamera ferngesteuert wird.

## Revendications

1. Dispositif d'identification pour caméra (1) comportant un moyen (10, 20) pour afficher un identifiant de caméra, **caractérisé en ce qu'**il comporte un moyen d'éclairage (10, 21) pour éclairer l'identifiant selon au moins deux couleurs distinctes, seulement une des couleurs étant utilisée lorsque la caméra (1) est à l'antenne.

2. Viseur de caméra comportant au moins un dispositif (30 à 32) d'identification comprenant un moyen (10, 20) pour afficher un identifiant de la caméra sur au moins une face extérieure dudit viseur (6), **caractérisé en ce que** le dispositif d'identification comporte un moyen d'éclairage (10, 21) pour éclairer l'identifiant selon au moins deux couleurs distinctes, seulement une des couleurs étant utilisée lorsque la caméra est à l'antenne.

3. Viseur selon la revendication 2, **caractérisé en ce qu'**il comporte trois dispositifs d'identification (30 à 32), un premier dispositif (30) étant placé sur une face correspondant à la direction d'un objectif de la caméra (1), un deuxième et un troisième dispositifs (31 et 32) étant placés sur deux faces opposées correspondant aux cotés latéraux de la caméra (1).

4. Caméra comportant au moins un dispositif d'identification comprenant un moyen (10, 20) pour afficher un identifiant de la caméra, **caractérisé en ce que** le dispositif d'identification comporte un moyen (10, 21) d'éclairage pour éclairer l'identifiant selon au moins deux couleurs distinctes, seulement une des couleurs étant utilisée lorsque la caméra est à l'antenne.

5. Caméra selon la revendication 4, **caractérisé en ce que** le dispositif d'identification est placé sur le viseur (6) de la caméra.

6. Caméra selon l'une des revendications 4 ou 5, **caractérisé en ce qu'**elle comporte au moins trois dispositifs (30 à 32) sur trois cotés distincts.

7. Dispositif selon la revendication 1, viseur selon l'une des revendications 2 ou 3, ou caméra selon l'une des revendications 4 à 6, **caractérisé en ce que** le moyen d'éclairage est constitué de diodes électroluminescentes (10, 21).

8. Dispositif, viseur ou caméra selon la revendication 7, **caractérisé en ce que** le moyen pour afficher l'identifiant de la caméra est un écran à cristaux liquides (20) rétro-éclairé par le moyen d'éclairage (21).

9. Dispositif, viseur ou caméra selon la revendication 7, **caractérisé en ce que** les diodes électroluminescentes (10, 21) sont éclairées plus fortement lorsque la caméra est à l'antenne.

10. Dispositif selon la revendication 1, viseur selon l'une des revendications 2 ou 3, ou caméra selon l'une des revendications 4 à 6, **caractérisé en ce que** la couleur utilisée lorsque la caméra est à l'antenne est le rouge.

11. Dispositif selon la revendication 1, viseur selon l'une des revendications 2 ou 3, ou caméra selon l'une des revendications 4 à 6, **caractérisé en ce que** le moyen (10, 20) pour afficher l'identifiant est commandé à distance à partir d'un dispositif de contrôle distant de la caméra.
